# EUROPÄISCHE PATENTSCHRIFT

(11) **EP 1 164 062 B1**
(45) Veröffentlichungstag und Bekanntmachung des Hinweises auf die Patenterteilung: **25.02.2004**
(21) Anmeldenummer: 01250207.6
(22) Anmeldetag: 11.06.2001
(51) Int. Cl.: B60R 21/20

(54) **Schutzeinrichtung für die Insassen eines Fahrzeugs sowie Verfahren zum Schutz von Insassen**
Protection arrangement for occupants of a vehicle and method thereof
Dispositif de protection pour passager de véhicule et méthode de protection

(30) Priorität: 13.06.2000 DE 10029046
(43) Veröffentlichungstag der Anmeldung: 19.12.2001
(73) Patentinhaber: TAKATA-PETRI (Ulm) GmbH, 89081 Ulm (DE)
(72) Erfinder: Bossecker, Maximilian, 89134 Blaustein (DE); Karlbauer, Ulrich, 89079 Ulm (DE)
(74) Vertreter: Baumgärtel, Gunnar, Dr.

(56) Entgegenhaltungen:
- DE-A- 19 509 014
- US-A- 5 738 407
- PATENT ABSTRACTS OF JAPAN vol. 2000, no. 03, 30. März 2000 (2000-03-30) & JP 11 342822 A (KANTO AUTO WORKS LTD), 14. Dezember 1999 (1999-12-14)
- PATENT ABSTRACTS OF JAPAN vol. 2000, no. 03, 30. März 2000 (2000-03-30) & JP 11 334516 A (MAZDA MOTOR CORP), 7. Dezember 1999 (1999-12-07)
- PATENT ABSTRACTS OF JAPAN vol. 017, no. 349 (C-1078), 2. Juli 1993 (1993-07-02) & JP 05 049523 A (NISSAN MOTOR CO LTD), 2. März 1993 (1993-03-02)
- PATENT ABSTRACTS OF JAPAN vol. 1998, no. 05, 30. April 1998 (1998-04-30) & JP 10 006907 A (TOYOTA MOTOR CORP), 13. Januar 1998 (1998-01-13)

## Beschreibung

Die Erfindung betrifft eine Schutzeinrichtung für die Insassen eines Fahrzeuges, insbesondere eines Kraftfahrzeuges, mit einer im Fahrzeugsitz integrierten Luftsackanordnung, die mindestens einen zum Schutz des Kopf-Nacken-Bereiches des Insassen dienenden Luftsack aufweist. Ferner betrifft die Erfindung ein Verfahren nach Anspruch 22 zum Schutz eines Insassen eines Fahrzeuges.

Eine Schutzeinrichtung der eingangs genannten Art ist grundsätzlich bekannt und wird insbesondere in Kraftfahrzeugen eingesetzt. Hierbei ist im Fahrzeugsitz eine Luftsackanordnung integriert, die mindestens einen zum Schutz des Kopf-Nacken-Bereiches des Fahrzeuginsassen dienenden Luftsack aufweist. Im Fall einer Front- oder Heckkollision des Fahrzeuges wird der Luftsack aufgeblasen und entfaltet sich im Bereich der Kopfstütze des Fahrzeugsitzes. Der sich aufgrund seiner Massenträgheit während der Kollision zunächst in Aufprallrichtung bewegende Insasse wird, sofern er von einem Rückhaltesystem, wie beispielsweise einem Sicherheitsgurt, im Fahrzeugsitz gehalten wird, nach seiner Bewegung in Aufprallrichtung wieder in den Fahrzeugsitz zurückgezogen, wobei er mit seinem rückenseitigen Kopf-Nacken-Bereich in den zwischenzeitlich am Fahrzeugsitz aufgeblasenen Luftsack eintaucht. Mit Hilfe dieser bekannten Schutzeinrichtung soll einem Halswirbelsäulen-Schleudertrauma vorgebeugt werden.

Aus der DE 195 09 014 A1 als nächstliegendem Stand der Technik ist ein Kraftfahrzeugsitz mit Rückenlehne und Kopfstütze bekannt, bei dem in einem Crash-Fall mittels eines an der Kopfstütze angeordneten Gasgenerators ein Luftsack aufgeblasen wird, der sich dann zwischen der Kopfstütze sowie dem Nacken und Hinterkopf eines Fahrzeuginsassen entfaltet, um ein Halswirbelsäulen-Schleudertrauma des Fahrzeuginsassen durch einen Schutz des Kopfes und des Nackens zu verhindern.

Aus der JP-A 11342822 ist ein weiterer Fahrzeugsitz mit Rückenlehne und Kopfstütze bekannt, wobei sich in diesem Fall zum Schutz des Rückens, Nackens und Kopfes eines Fahrzeuginsassens in einem Crash-Fall ein mittels eines Gasgenerators aufblasbarer Gassack aus der Rückenlehne des Sitzes heraus entfaltet und dann zwischen dem Rücken, Nacken und Kopf des Fahrzeuginsassen einerseits und der Rückenlehne und Kopfstütze des Fahrzeugsitzes andererseits erstreckt.

Es ist die Aufgabe der Erfindung, eine Schutzeinrichtung bzw. ein Verfahren zum Schutz eines Insassen eines Fahrzeuges zu schaffen, die bzw. das insbesondere bei Fahrzeugüberschlägen eine große Schutzwirkung für Insassen gewährt.

Diese Aufgabe wird durch eine Schutzeinrichtung mit den Merkmalen nach Anspruch 1 gelöst und insbesondere dadurch, dass der Luftsack, wenn ein Überschlagen des Kraftfahrzeugs erfasst wird, so weit aufgeblasen wird und unter einem solchen Winkel von dem Fahrzeugsitz absteht, dass er den Kopf des Insassen aktiv in Richtung auf die Brust des Insassen beugt.

Ferner wird die Aufgabe durch ein Verfahren mit den Merkmalen nach Anspruch 22 gelöst.

Bei der erfindungsgemäßen Schutzeinrichtung bzw. dem erfindungsgemäßen Verfahren wird der Luftsack bei einem Überschlagen des Fahrzeugs so weit aufgeblasen und steht vom Fahrzeugsitz so ab, dass der Kopf des Insassen in Richtung der Brust des Insassen aktiv gebeugt ist. Durch die vom Luftsack erzwungene gebeugte Haltung des Insassen stößt dieser nicht mehr mit der Oberseite seines Kopfes am Fahrzeugdach an, wenn sich der Insasse trotz des angelegten Sicherheitsgurtes beim Überschlagen des Fahrzeugs in Richtung Fahrzeugdach bewegt. Vielmehr wird der Insasse durch den Luftsack in einer definierten, gebeugten Haltung gedrückt, die ein Anschlagen des Insassen mit der Oberseite seines Kopfes am Fahrzeugdach verhindert, so daß er bei einer Bewegung in Richtung Fahrzeugdach allenfalls unter einem unkritischen Winkel am Fahrzeugdach anschlägt. Hierbei wird die natürliche Ausweichbewegung des Kopfes aufgrund der durch den Luftsack verursachten gebeugten Haltung des Kopfes unterstützt, wodurch Halswirbelsäulenverletzungen wirksam vermieden werden können.

Vorteilhafte Weiterbildungen der Erfindung ergeben sich aus der nachfolgenden Beschreibung, der Zeichnung sowie den Unteransprüchen.

So wird bei einer bevorzugten Ausführungsform der Schutzeinrichtung vorgeschlagen, daß sich der Luftsack in zumindest annähernd vollständig aufgeblasenem Zustand zumindest an der Kopfstütze des Fahrzeugsitzes und gegebenenfalls auch am Fahrzeugdach abstützt. Auf diese Weise wird der aufgeblasene Luftsack in einer definierten Lage im Fahrzeug gehalten, wodurch der Insasse bei seiner Bewegung im Fahrzeug während des Überschlagens in seiner definierten gebeugten Haltung verharrt. Sollte das Fahrzeug als Cabriolet ausgeführt sein, hält der Luftsack den Insassen in seiner gebeugten Haltung, wodurch ein direkter Kontakt seines Kopfes mit dem Boden vermieden wird, während das Cabriolet auf seinen Rahmenteilen und Überrollbügeln abrollt.

Des weiteren ist es von Vorteil, wenn der Luftsack in zumindest annähernd vollständig aufgeblasenen Zustand an seinen seitlichen Rändern in Richtung der Sitzfläche des Fahrzeugsitzes erhaben ist. Durch die erhabenen Ränder an den Seitenkanten des Luftsacks wird der Kopf des Insassen während des Aufblasens relativ zum Luftsack ausgerichtet, damit er eine für den weiteren Bewegungsablauf besonders günstige Stellung einnimmt.

Bei einer besonders bevorzugten Ausführungsform der Sicherheitseinrichtung ist der Luftsack im aufgeblasenen Zustand in einen Halteabschnitt zum Beugen des Kopfes des Insassen und einen Stützabschnitt untergliedert, mit dem der Halteabschnitt am Fahrzeugsitz abgestützt wird. Durch die Untergliederung des Luftsacks wird erreicht, daß der Stützabschnitt zur Aufnahme der entstehenden Kräfte entsprechend dimensioniert werden kann, während gleichzeitig der Halteabschnitt entsprechend seiner Funktion zum Beugen des Kopfes des Insassen gestaltet ist.

Bei dieser Ausführungsform wird ferner vorgeschlagen, den Halteabschnitt aus mehreren nebeneinander angeordneten, miteinander gegebenenfalls in Strömungsverbindung stehenden, länglichen Kammern auszubilden, die sich in aufgeblasenem Zustand vorzugsweise mit ihren Längsrichtungen ausgehend vom Fahrzeugsitz in Richtung des Fahrzeugdaches erstrecken. Durch die Ausrichtung der länglichen Kammern in Richtung des Fahrzeugdaches wird eine für das Beugen des Kopfes des Insassen optimierte Stützfläche gebildet.

Der Stützabschnitt kann bei dieser bevorzugten Ausführungsform eine längliche Kammer aufweisen, die sich in aufgeblasenem Zustand quer zur Längsrichtung der Rückenlehne des Fahrzeugsitzes erstreckt, wodurch sich eine besonders gute Stützwirkung für den Halteabschnitt ergibt, wie sich in Versuchsreihen gezeigt hat.

Bei einer alternativen Ausführungsform der erfindungsgemäßen Schutzeinrichtung ist der Luftsack derart geformt, daß er in zumindest annähernd vollständig aufgeblasenem Zustand in den Halteabschnitt und den Stützabschnitt untergliedert ist, wobei der Halteabschnitt und der Stützabschnitt eine gemeinsame Kammer bilden. Die Verwendung eines derart geformten Luftsacks hat den Vorteil, daß die Herstellung des Luftsacks und damit auch die Herstellung der Schutzeinrichtung vergleichsweise einfach und ohne großen Aufwand zu realisieren ist.

Gemäß einer weiteren Ausführungsform der erfindungsgemäßen Schutzeinrichtung wird die Verwendung eines Luftsacks vorgeschlagen, der aus mehreren nebeneinander angeordneten, länglichen Kammern gebildet ist, die miteinander in Strömungsverbindung stehen und sich in aufgeblasenem Zustand quer zur Längsrichtung der Rückenlehne des Fahrzeugsitzes erstrecken. Die einzelnen Kammern sind bei dieser Ausführungsform derart abschnittsweise miteinander verbunden, daß der Luftsack in zumindest annähernd vollständig aufgeblasenem Zustand vom Fahrzeugsitz ausgehend einen gekrümmten Verlauf zeigt, durch den der Kopf des Insassen gebeugt wird. Der Vorteil dieser Ausführungsform besteht darin, daß sich die Krümmung des Luftsacks durch das miteinander Verbinden der einzelnen Kammern einfach realisieren läßt. Ferner weist der Luftsack aufgrund seiner Strukturierung in verschiedene Kammern ein vergleichsweise geringes Volumen auf, das seinerseits zu einer hohen Formstabilität des Luftsacks in aufgeblasenem Zustand führt. Darüber hinaus kann bei entsprechender Gestaltung der Kammern ein definiertes Entfalten des Luftsacks während des Befüllens auf einfache Weise erreicht werden.

Bei einer besonders bevorzugten Ausführungsform ist der Luftsack bzw. der Halteabschnitt so gestaltet, daß er quer zur Längsrichtung der Rükkenlehne betrachtet in aufgeblasenem Zustand eine Keilform besitzt, durch die der Kopf des Insassen gebeugt wird.

Alternativ kann der Luftsack bzw. der Halteabschnitt so gestaltet sein, daß er in aufgeblasenem Zustand als Rutsche wirkt, entlang der der Insasse während einer eventuellen Bewegung in Richtung des Fahrzeugdaches mit seinem durch den Luftsack gebeugten Kopf gleichzeitig entlang einer definierten Bahn geführt wird. Bewegt sich der Insasse während eines Überschlagens des Fahrzeuges geringfügig aus dem Fahrzeugsitz in Richtung des Fahrzeugdaches, gleitet der Insasse mit seinem Kopf-Nacken-Bereich entlang des als Rutsche ausgebildeten Luftsacks in Richtung des Fahrzeugdaches. Hierdurch wird ein gezieltes Führen des Kopf-Nacken-Bereiches des Insassen insbesondere während eines Überschlagens des Fahrzeuges bewirkt, so daß der Kopf des Insassen bei einem Anprall an das Fahrzeugdach ausweichen kann, ohne daß dabei die entstehenden Kräfte ausschließlich von der Halswirbelsäule aufgenommen werden.

Bei einer weiteren Ausführungsform der erfindungsgemäßen Schutzeinrichtung wird eine Luftsackanordnung eingesetzt, die zwei Luftsäcke aufweist. Der erste Luftsack ist in der Rückenlehne des Fahrzeugsitzes integriert und dient in aufgeblasenem Zustand zum Beugen des Kopfes des Insassen. Der zweite Luftsack ist in der Kopfstütze des Fahrzeugsitzes integriert, der in zumindest annähernd vollständig aufgeblasenem Zustand nahe der Kopfstütze angeordnet ist. Bei dieser Ausführungsform hat die Luftsackanordnung eine Doppelfunktion. Kommt es beispielsweise zu einem Überschlagen des Fahrzeuges, wird sowohl der erste Luftsack zum Beugen des Kopfes des Insassen als auch der zweite Luftsack aufgeblasen, mit dem der erste Luftsack am Fahrzeugsitz abgestützt wird. Kommt es dagegen zu einem Frontal- oder Heckaufprall des Fahrzeuges, wird nur der in der Kopfstütze integrierte zweite Luftsack aufgeblasen, in den der Insasse während des Aufpralls eintaucht, wodurch die zuvor beschriebenen Halswirbelsäulen-Schleudertrauma vermieden werden können.

Da insbesondere bei einem Überschlagen des Fahrzeuges der Innendruck im aufgeblasenen Luftsack über einen längeren Zeitraum aufrechterhalten bleiben muß, damit der Luftsack seine Schutzfunktion erfüllen kann, wird vorgeschlagen, das Gewebe des Luftsacks zumindest annähernd gasdicht auszubilden. Das im Luftsack enthaltene Gas kann nach dem Überschlagen des Fahrzeuges verzögert, beispielsweise durch ein entsprechend angesteuertes Ventil, abgelassen werden.

Damit sich der Luftsack an einer möglichst großen Fläche am Fahrzeugsitz abstützen kann, wird ferner vorgeschlagen, den Luftsack so auszuformen, daß er während des Entfaltens die am Fahrzeugsitz verschieblich gehaltene Kopfstütze in eine angehobene Stellung bewegt, in der der aufgeblasene Luftsack großflächig an der Kopfstütze abstützbar ist.

Des weiteren ist es von Vorteil, wenn bei den Ausführungsformen, bei denen der Luftsack der Luftsackanordnung jeweils in der Rückenlehne des Fahrzeugs integriert ist, der Sitzbezug entlang einer vorgegebenen Linie definiert derart aufreißt, daß der Sitzbezug und gegebenenfalls auch das Rückenpolster der Rückenlehne nach dem Aufblasen des Luftsacks zumindest abschnittsweise zwischen dem Insassen und dem Luftsack angeordnet ist bzw. sind. Durch das Zusammenwirken des Luftsacks mit dem Sitzbezug und dem Rückenpolster kann eine Fehlfunktion des Luftsacks beispielsweise durch vom Insassen getragene Kleidungsstücke wirksam vermieden werden.

Die Schutzeinrichtung verfügt vorzugsweise über eine Steuereinheit, die bei einem Überschlagen des Fahrzeuges den Gasgenerator bzw. die Gasgeneratoren zum Aufblasen des Luftsacks zündet. Bei der Verwendung einer derartigen Steuereinheit zum Zünden des Luftsacks ist es ferner von Vorteil, wenn die Steuereinheit bei einem Frontal- oder Heckaufprall des Fahrzeuges den in diesem Fall mehrstufigen Gasgenerator bzw. mindestens einen der Gasgeneratoren der Luftsackanordnung derart betätigt, daß der Luftsack nur so weit mit Gas gefüllt wird, daß sich der Luftsack zwischen dem Kopf des Insassen und der Kopfstütze des Fahrzeugs befindet, ohne daß dabei der Kopf des Insassen verlagert wird. Wie bei dem zuvor beschriebenen Ausführungsbeispiel, bei dem zwei Luftsäcke für die Luftsackanordnung verwendet werden, kann durch eine entsprechende Ansteuerung des Luftsacks mit Hilfe der Steuereinheit auch bei Luftsackanordnungen, die nur einen Luftsack verwenden, eine Doppelfunktion der Schutzeinrichtung ermöglicht werden, bei der die Luftsackanordnung bei einem Frontal- oder Heckaufprall als Schutzeinrichtung vor Halswirbelsäulen-Schleudertraumata wirkt.

Gemäß einem weiteren Aspekt der Erfindung wird ein Verfahren zum Schutz des Insassen vorgeschlagen, nach dem die zuvor beschriebenen Schutzeinrichtungen arbeiten.

Bei einer Weiterbildung dieses Verfahrens wird unter anderem vorgeschlagen, ein Auslösen des Luftsacks zu verhindern, wenn sich der Fahrzeugsitz in einer für das Entfalten des Luftsacks ungeeigneten Stellung befindet, wenn der Insasse nicht ordnungsgemäß angeschnallt ist, oder wenn der Fahrzeugsitz unbesetzt ist.

Des weiteren wird vorgeschlagen, ein Auslösen eines im Fahrzeug vor dem Fahrzeugsitz angeordneten Frontluftsacks zu verhindern, wenn der Luftsack zum Schutz des Kopf-Nacken-Bereiches gezündet werden soll.

Nachfolgend wird die Erfindung anhand von sechs Ausführungsbeispielen unter Bezugnahme auf die Zeichnung näher erläutert. Darin zeigen:
- Fig. 1: eine schematische Seitenansicht eines ersten Ausführungsbeispiels einer Schutzeinrichtung unmittelbar vor dem Auslösen eines etwa keilförmigen Luftsacks;
- Fig. 2: eine schematische Seitenansicht der Schutzeinrichtung nach Fig. 1 unmittelbar nach dem vollständigen Entfalten des Luftsacks;
- Fig. 3: eine schematische Seitenansicht der Schutzeinrichtung nach Fig. 1 mit teilweise aufgeblasenem Luftsack;
- Fig. 4: eine schematische Seitenansicht eines zweiten Ausführungsbeispiels einer Schutzeinrichtung mit einem als Rutsche dienenden Luftsack, in den der Insasse des Fahrzeuges während des Überschlagens des Fahrzeuges eintaucht;
- Fig. 5: eine schematische Seitenansicht eines dritten Ausführungsbeispiels einer Schutzeinrichtung, bei der ein in einen Halteabschnitt und einen Stützabschnitt untergliederter Luftsack verwendet wird;
- Fig. 6: eine schematische Seitenansicht eines vierten Ausführungsbeispiels einer Schutzeinrichtung, bei der ein in der Kopfstütze des Fahrzeugsitzes integrierter Luftsack verwendet wird;
- Fig. 7: eine schematische Seitenansicht eines fünften Ausführungsbeispieles einer Schutzeinrichtung, bei der ein aus mehreren Kammern gebildeter Luftsack verwendet wird; und
- Fig. 8: eine schematische Seitenansicht eines sechsten Ausführungsbeispieles einer Schutzeinrichtung, bei der zwei Luftsäcke verwendet werden.

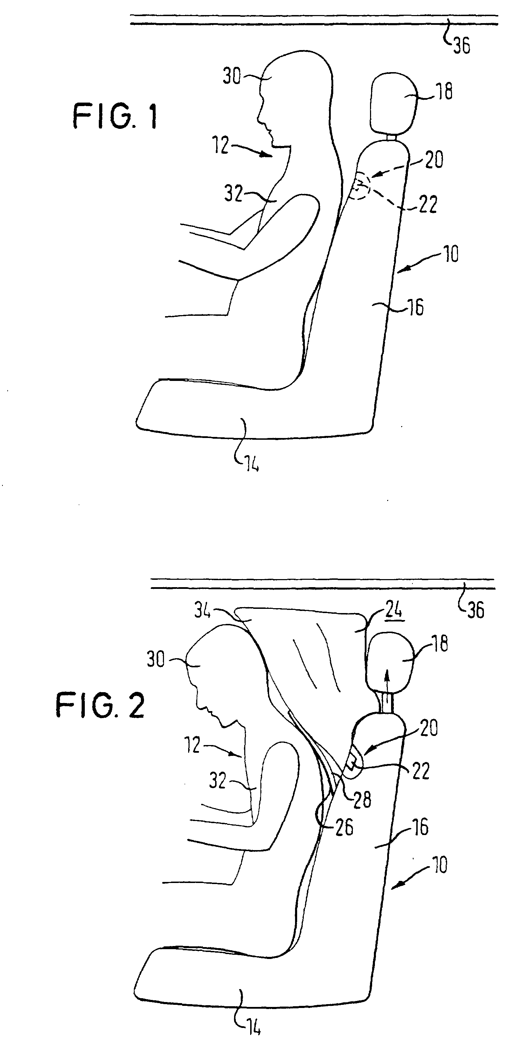

In Fig. 1 ist in schematischer Seitenansicht ein Fahrzeugsitz 10 eines Kraftfahrzeuges gezeigt, auf dem ein Insasse 12 Platz genommen hat. Der Fahrzeugsitz 10 weist eine Sitzfläche 14 auf, von der eine in ihrer Neigung verstellbare Rückenlehne 16 absteht. An der Oberseite der Rückenlehne 16 ist eine in bekannter Weise verschieblich gehaltene Kopfstütze 18 befestigt.

Der Fahrzeugsitz 10 ist mit einer Schutzeinrichtung 20 nach einem ersten Ausführungsbeispiel ausgestattet. Die Schutzeinrichtung 20 weist eine Luftsackanordnung 22 auf, die nahe der Oberseite der Rückenlehne 16 in dieser aufgenommen und gehalten ist. Die Luftsackanordnung 22 ist mit einem mehrstufigen Gasgenerator (nicht dargestellt) ausgestattet, der mit einem Luftsack 24 verbunden ist. Wie Fig. 2 zeigt, besitzt der Luftsack 24, quer zur Längsrichtung der Rückenlehne 16 betrachtet, in zumindest annähernd vollständig aufgeblasenem Zustand eine etwa keilförmige Gestalt. Der Gasgenerator wird durch eine nicht dargestellte Steuereinheit der Schutzeinrichtung 20 gezündet.

Ist das Fahrzeug in einen Verkehrsunfall verwickelt, bei dem sich das Fahrzeug überschlägt, zündet die Steuereinheit der Schutzeinrichtung 20 den Gasgenerator der Luftsackanordnung 22. Nach dem Zünden des Gasgenerators bläst dieser den Luftsack 24 der Luftsackanordnung 22 innerhalb eines Zeitraums von etwa 100 ms bis 600 ms bis zu seiner vollständigen Größe auf. An der Rückenlehne 16 ist nahe der Luftsackanordnung 22 eine Naht (nicht dargestellt) vorgesehen, entlang der der Sitzbezug 26 der Rückenlehne 16 und das Rückenpolster 28 entlang einer vorgegebenen Linie definiert aufreißen. Nach dem Aufreißen des Sitzbezuges 26 und des Rückenpolsters 28 tritt der Luftsack 24 aus der so an der Rückenlehne 16 gebildeten Öffnung aus und entfaltet sich in Richtung des Insassen 12, wie in Fig. 2 dargestellt ist.

Aufgrund von am Luftsack 24 vorgesehenen Nähten und der Keilform des Luftsacks 24 entfaltet sich dieser gleichzeitig auch in Richtung der Kopfstütze 18, wobei die verschieblich an der Rückenlehne 16 gehaltene Kopfstütze 18 in eine angehobene Position bewegt wird, wie durch den Pfeil in Fig. 2 angedeutet ist, in der sie eine für den Luftsack 24 optimale Stützfunktion erfüllt. Der Luftsack 24 drückt in seinem vollständig aufgeblasenen Zustand, wie er in Fig. 2 gezeigt ist, aufgrund seiner Keilform den am Fahrzeugsitz 10 festgegurteten Insassen 12 insbesondere im Kopf-Nacken-Bereich so von der Rückenlehne 16 weg, daß der Kopf 30 des Insassen 12 in Richtung seiner Brust 32 gebeugt ist. Dabei wird der zuvor aufgerissene Sitzbezug 26 und das Rückenpolster 28 zwischen dem Insassen 12 und dem entfalteten Luftsack 24 geklemmt, wodurch eine Fehlfunktion des Luftsacks 24 beispielsweise durch Kleidungsstücke des Insassen 12 wirksam vermieden werden kann. Der Luftsack 24 ist soweit aufgeblasen, daß er bezüglich der Längsrichtung der Rückenlehne 16 geneigt in Richtung der Sitzfläche 14 vom Fahrzeugsitz 10 absteht und einen Keil 34 zwischen dem Kopf 30 des Insassen 12 und dem oberen Bereich der Rückenlehne 16 sowie der Kopfstütze 18 des Fahrzeugsitzes 10 bildet.

Sollte nun das Fahrzeugdach 36 während des Überschlagens des Fahrzeuges eingedrückt werden oder sollte sich der Insasse 12 während des Überschlagens des Fahrzeuges zumindest geringfügig aus dem Fahrzeugsitz 10 in Richtung des Fahrzeugdaches 36 bewegen, kann der Kopf 30 des Insassen 12 aufgrund seiner gebeugten Haltung entsprechen der abgerundeten Halswirbelsäule in Richtung Brust 32 ausweichen, so daß Halswirbelsäulenverletzungen vermieden werden.

Um eine ordnungsgemäße Funktion der Schutzeinrichtung 20 sicherzustellen, verfügt die Steuereinheit der Schutzeinrichtung 20 über mehrere Sensoren, die unter anderem die Stellung des Fahrzeugsitzes 10 ermitteln, erfassen, ob eine Person auf dem Fahrzeugsitz 10 Platz genommen hat, oder ob der auf dem Fahrzeugsitz 10 sitzende Insasse 12 angeschnallt ist.

Wenn sich der Fahrzeugsitz 10 in einer für das Auslösen des Luftsacks 24 ungünstigen Stellung befindet, beispielsweise wenn die Rückenlehne 16 zu stark geneigt ist, wenn der Fahrzeugsitz 10 nicht besetzt ist, oder wenn der auf dem Fahrzeugsitz 10 sitzende Insasse 12 nicht am Fahrzeugsitz 10 festgeschnallt ist, verhindert die Steuereinheit der Schutzeinrichtung 20 ein Auslösen des Luftsacks 24.

Zündet dagegen die Steuereinheit der Schutzeinrichtung 20 den Gasgenerator der Luftsackanordnung 22, verhindert sie andererseits zumindest zeitweise das Entfalten eines beispielsweise unmittelbar vor dem Fahrzeugsitz 10 im Fahrzeug vorgesehenen Frontluftsacks (nicht dargestellt), wodurch ein gleichzeitiges bzw. kurzfristig aufeinanderfolgendes Auslösen dieser beiden Luftsäcke vermieden wird.

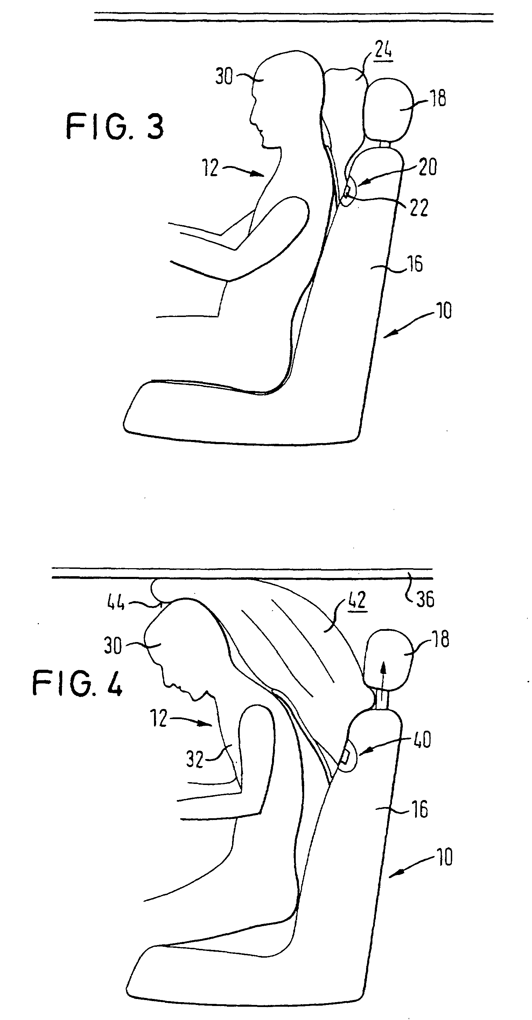

Des weiteren ist die Steuereinheit der Schutzeinrichtung 20 so ausgelegt, daß sie bei einem Front- oder Heckaufprall des Fahrzeuges den mehrstufigen Gasgenerator der Luftsackanordnung 22 nur teilweise zündet, so daß der Luftsack 24 zwar aus der Rückenlehne 16 des Fahrzeugsitzes 10 austritt, sich jedoch nur so weit entfaltet, daß er zwischen der Kopfstütze 18 und dem Kopf 30 des Insassen 12 positioniert ist, den Kopf 30 des Insassen 12 jedoch allenfalls geringfügig von der Kopfstütze 18 wegdrückt, wie in Fig. 3 gezeigt ist. Die Form des Luftsacks 24 bleibt in diesem teilweise aufgeblasenen Zustand beispielsweise durch die Art der Faltung oder durch Nähte, die erst beim weiteren Aufblasen des Luftsacks 24 reißen würden, erhalten.

In diesem Zustand verharrt der Luftsack 24 am Fahrzeugsitz 10 während des Aufpralls, so daß der von dem Sicherheitsgurt bzw. von dem Gurtstraffer wieder in den Fahrzeugsitz 10 zurückgezogene Insasse 12 bei seiner nach dem Aufprall aufgrund der Massenträgheit auftretenden Bewegung in Richtung des Fahrzeugsitzes 10 mit seinem Kopf 30 in den nur teilweise aufgeblasenen Luftsack 24 eintaucht, jedoch nicht unmittelbar an der Kopfstütze 18 anschlägt. Auf diese Weise können insbesondere Halswirbelsäulen-Schleudertraumata beim Insassen 12 wirksam verhindert werden.

In Fig. 4 ist ein zweites Ausführungsbeispiel einer Schutzeinrichtung 40 gezeigt, deren Aufbau und Funktionsweise im wesentlichen dem Aufbau und der Funktionsweise der zuvor beschriebenen Schutzeinrichtung 20 entspricht. Wesentlicher Unterschied zwischen diesen beiden Schutzeinrichtungen 20 und 40 besteht jedoch in dem verwendeten Luftsack 42. Wie Fig. 4 zeigt, weist der Luftsack 42 der Luftsackanordnung in vollständig aufgeblasenem Zustand eine längliche Form auf, die sich von der Rükkenlehne 16 ausgehend unter einem Winkel zu dessen Längsrichtung geneigt in Richtung des Insassen 12 erstreckt. Wie bei dem zuvor beschriebenen ersten Ausführungsbeispiel drückt auch bei diesem Ausführungsbeispiel der Luftsack 42 den Kopf 30 des Insassen auf die Brust 32 des Insassen 12, wodurch der Insasse 12 seine in Fig. 4 gezeigte, gebeugte Haltung einnimmt.

Zusätzlich ist der Luftsack 42 jedoch noch als Rutsche 44 ausgebildet, entlang der der Insasse 12 in Richtung des Fahrzeugdaches 36 geführt gleitet, wenn sich der Insasse 12 beispielsweise aufgrund eines zu locker angelegten Sicherheitsgurtes in Richtung des Fahrzeugdach 36 bewegt. Durch die geneigte Haltung des Insassen 12, die durch den Luftsack 42 verursacht ist, kann der Insasse 12 allenfalls unter einem unkritischen Winkel mit seinem Hinterkopf am Fahrzeugdach 36 anschlagen, wie in Fig. 4 angedeutet ist, wobei der zwischen dem Kopf 30 des Insassen 12 und dem Fahrzeugdach 36 befindliche Abschnitt des Luftsacks 42 den Aufprall am Fahrzeugdach 36 zusätzlich mildert.

Mit Hilfe der zuvor beschriebenen Schutzeinrichtung 40 ist es möglich, insbesondere bei einem Überschlagen des Fahrzeuges, den Insassen 12 durch die Rutsche 44 zu führen, so daß er allenfalls in einem definierten, unkritischen Winkel mit seinem Kopf 30 am Fahrzeugdach 36 anschlägt. Die dabei entstehenden Aufprallkräfte greifen aufgrund der gebeugten Haltung des Insassen 12 in einer insbesondere für die Halswirbelsäule günstigen Richtung derart am Körper des Insassen 12 an, daß die Halswirbelsäule ausweichen kann und eventuelle Halswirbelsäulenverletzungen wirksam vermieden werden können.

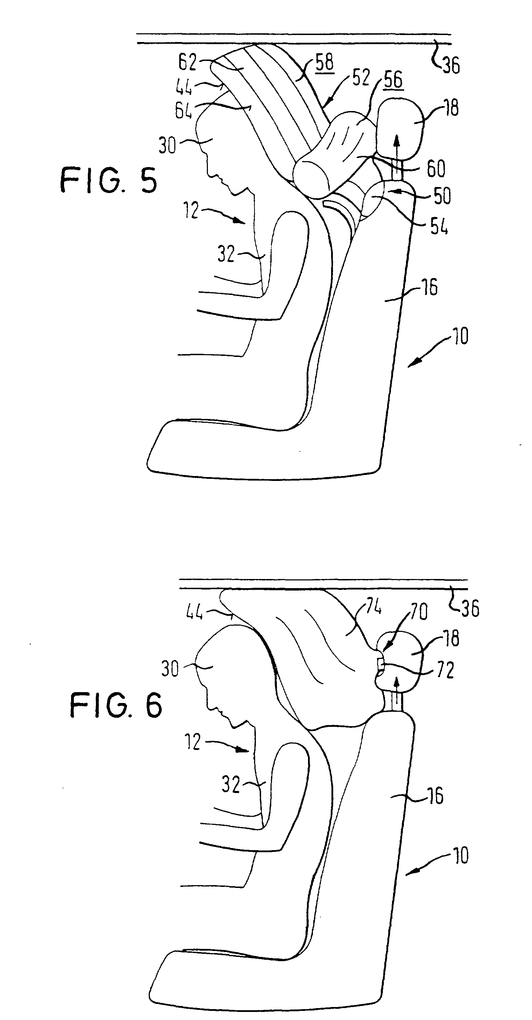

In Fig. 5 ist ein drittes Ausführungsbeispiel einer Schutzeinrichtung 50 gezeigt, deren Funktionsweise im wesentlichen der Funktionsweise der Schutzeinrichtung 40 nach dem zweiten Ausführungsbeispiel gleicht. Einziger Unterschied zwischen den beiden Ausführungsbeispielen besteht in dem verwendeten Luftsack 52 der Luftsackanordnung 54. Der Luftsack 52 ist bei diesem dritten Ausführungsbeispiel aus einem unmittelbar mit dem Gasgenerator in Verbindung stehenden Stützabschnitt 56 und einem sich an den Stützabschnitt 56 anschließenden Halteabschnitt 58 gebildet, der, wie beim zuvor beschriebenen zweiten Ausführungsbeispiel, in aufgeblasenem Zustand als Rutsche 44 wirkt. Der Stützabschnitt 56 und der Halteabschnitt 58 stehen in Strömungsverbindung miteinander, so daß das aus dem Gasgenerator austretende Gas zunächst den Stützabschnitt 56 und anschließend den Halteabschnitt 58 füllt.

Der Stützabschnitt 56 ist aus einer quer zur Längsrichtung der Rückenlehne 16 des Fahrzeugsitzes 10 verlaufenden länglichen Kammer 60 mit rundem Querschnitt gebildet und drückt beim Entfalten die Kopfstütze 18 des Fahrzeugsitzes 10 in eine angehobene Stellung, wie durch den Pfeil in Fig. 5 angedeutet ist. Der Halterabschnitt 58 besteht aus mehreren, nebeneinander angeordneten, miteinander verbundenen Längskammern 62, die sich in aufgeblasenem Zustand mit ihren Längsrichtungen ausgehend vom Fahrzeugsitz 10 in Richtung des Fahrzeugdaches 36 erstrecken, wie Fig. 5 zeigt. Die Längskammern 62 des Halteabschnitts 58 sind dabei so durch Nähte voneinander getrennt, daß der Halteabschnitt 58 eine in Richtung der Sitzfläche 14 gewölbte Querschnittsform aufweist. Durch diese gewölbte Querschnittsform des Halteabschnitts 58 weist der Luftsack 52 an den Seiten des Halteabschnitts 58 erhabene Ränder 64 auf, mit deren Hilfe der Kopf 30 des Insassen 12 während des Entfaltens des Luftsacks 52 in eine definierte Position gebracht wird.

Auch bei diesem Ausführungsbeispiel ist es möglich, den Luftsack 52 nur so weit mit Gas zu befüllen, daß er bei einem Frontal- oder Heckaufprall des Fahrzeuges als Schutzeinrichtung für Halswirbelsäulen-Schleudertraumata wirkt. Ferner kann auch bei diesem Ausführungsbeispiel der Halteabschnitt 58 so ausgebildet sein, daß er wie der im ersten Ausführungsbeispiel in Fig. 2 gezeigte Keil 34 wirkt.

In Fig. 6 ist ein viertes Ausführungsbeispiel einer erfindungsgemäßen Schutzeinrichtung 70 gezeigt, die in ihrer Funktionsweise den beiden zuvor beschriebenen Schutzeinrichtungen 40 und 50 entspricht. Einziger Unterschied der Schutzeinrichtung 70 zu den zuvor beschriebenen Schutzeinrichtungen 40 und 50 besteht darin, daß die Luftsackanordnung 72 in der Kopfstütze 18 des Fahrzeugsitzes 10 integriert ist. Der Aufbau des Luftsacks 74 der Luftsackanordnung 72 entspricht im wesentlichen dem Aufbau des Luftsacks 42 des zweiten Ausführungsbeispiels, wobei auch bei diesem Ausführungsbeispiel durch den Luftsack 74 die Kopfstütze 18 während des Entfaltens des Luftsacks 74 in eine angehobene Position bewegt wird (vgl. Pfeil in Fig. 6), damit der Luftsack 74 besser abgestützt ist.

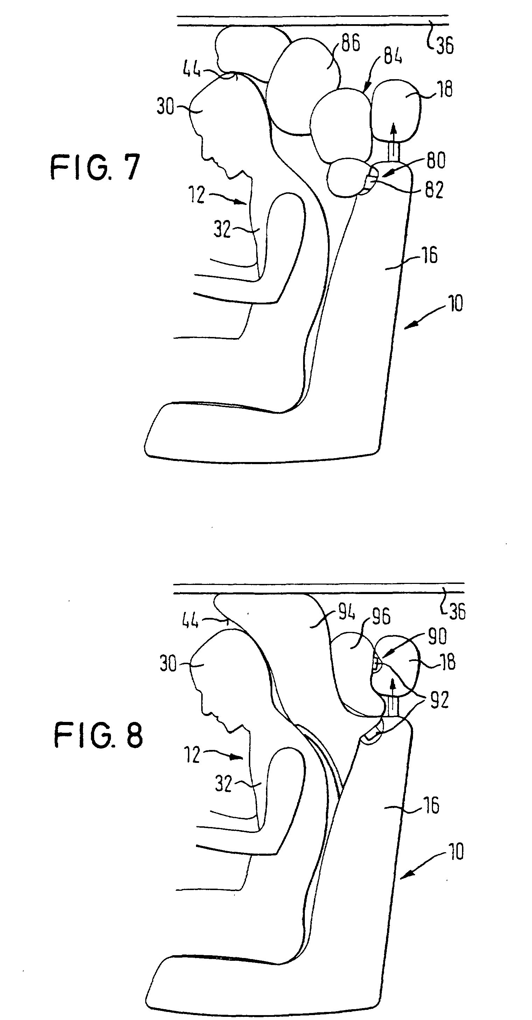

In Fig. 7 ist ein fünftes Ausführungsbeispiel einer Schutzeinrichtung 80 gezeigt, die, wie die zuvor beschriebenen beiden Schutzeinrichtungen 40 und 50, eine in die Rückenlehne 16 des Fahrzeugsitzes 10 integrierte Luftsackanordnung 82 aufweist. Bei diesem Ausführungsbeispiel ist der Luftsack 84 jedoch aus mehreren nebeneinander angeordneten länglichen Kammern 86 gebildet. Die länglichen Kammern 86 stehen miteinander in Strömungsverbindung und erstrecken sich in aufgeblasenem Zustand quer zur Längsrichtung der Rückenlehne 16 des Fahrzeugsitzes 10. Die einzelnen Kammern 86 des Luftsacks 84 sind derart abschnittsweise miteinander verbunden, daß der Luftsack 84 in zumindest annähernd vollständig aufgeblasenem Zustand vom Fahrzeugsitz 10 ausgehend zur Bildung der Rutsche 44 einen gekrümmten Verlauf zeigt. Auch bei diesem Ausführungsbeispiel drückt die unmittelbar an der Kopfstütze 18 anliegende Kammer 86 des Luftsacks 84 die Kopfstütze 18 in eine angehobene Position (vgl. Pfeil in Fig. 7), um die Stützfläche für den Luftsack 84 zu optimieren. Ferner kann auch bei diesem Ausführungsbeispiel der Luftsack 84 bei einem Frontal- oder Heckaufprall nur teilweise aufgeblasen werden, um den Insassen vor einem Schleudertrauma zu schützen. Des weiteren kann auch bei diesem Ausführungsbeispiel der Luftsack 84 so ausgebildet sein, daß er, wie der Luftsack 24 des ersten Ausführungsbeispiels, eine Keilform besitzt.

In Fig. 8 ist ein sechstes Ausführungsbeispiel einer Schutzeinrichtung 90 dargestellt. Bei dieser sechsten Ausführungsform weist die Schutzeinrichtung 90 eine Luftsackanordnung 92 mit einem ersten in der Rückenlehne 16 integrierten Luftsack 94 und einem in der Kopfstütze 18 integrierten zweiten Luftsack 96 auf. Auch bei diesem Ausführungsbeispiel dient die Schutzeinrichtung 90 zum Schutz des Kopf-Nacken-Bereiches des Insassen 12. Zu diesem Zweck wird annähernd gleichzeitig zunächst der erste Luftsack 94 und anschließend der zweite Luftsack 96 aufgeblasen, wobei der erste Luftsack 94 als Rutsche 44 dient, während der zweite Luftsack 96 zwischen dem ersten Luftsack 94 und der Kopfstütze 18 angeordnet ist, die Kopfstütze 18 anhebt (vgl. Pfeil in Fig. 8) und den ersten Luftsack 94 abstützt. Soll bei diesem Ausführungsbeispiel die Schutzeinrichtung 90 nur ihre Schutzfunktion gegen Halswirbelsäulen-Schleudertraumata ausüben, beispielsweise während eines Frontal- oder Heckaufpralls des Fahrzeuges, wird nur der zweite Luftsack 96 entfaltet, während der Gasgenerator des ersten Luftsacks 94 deaktiviert bleibt.

Schließlich ist noch zu bemerken, daß auch bei diesem Ausführungsbeispiel der erste Luftsack 94 so ausgebildet sein kann, daß er eine Keilform besitzt, wie sie im ersten Ausführungsbeispiel beschrieben ist.

### Bezugszeichenliste

- 10: Fahrzeugsitz
- 12: Insasse
- 14: Sitzfläche
- 16: Rückenlehne
- 18: Kopfstütze
- 20: Schutzeinrichtung
- 22: Luftsackanordnung
- 24: Luftsack
- 26: Sitzbezug
- 28: Rückenpolster
- 30: Kopf
- 32: Brust
- 34: Keil
- 36: Fahrzeugdach

- 40: Schutzeinrichtung
- 42: Luftsack
- 44: Rutsche

- 50: Schutzeinrichtung
- 52: Luftsack
- 54: Luftsackanordnung
- 56: Stützabschnitt
- 58: Halteabschnitt

- 60: längliche Kammer
- 62: Längskammern
- 64: Ränder

- 70: Schutzeinrichtung
- 72: Luftsackanordnung
- 74: Luftsack

- 80: Schutzeinrichtung
- 82: Luftsackanordnung
- 84: Luftsack
- 86: Kammern
- 90: Schutzeinrichtung
- 92: Luftsackanordnung
- 94: erster Luftsack
- 96: zweiter Luftsack

## Patentansprüche

1. Schutzeinrichtung für die Insassen eines Fahrzeugs, insbesondere eines Kraftfahrzeugs, mit einer im Fahrzeugsitz (10) integrierten Luftsackanordnung (22; 54; 72; 82; 92), die mindestens einen zum Schutz des Kopf-Nacken- Bereiches des Insassen (12) dienenden Luftsack (24; 42; 52; 74; 84; 94) aufweist, wobei der Luftsack (24; 42; 52; 74; 84; 94) in zumindest annähernd vollständig aufgeblasenem Zustand vom Fahrzeugsitz (10) unter einem Winkel bezüglich der Längsrichtung der Rückenlehne (16) geneigt in Richtung der Sitzfläche (14) des Fahrzeugsitzes (10) absteht,
**dadurch gekennzeichnet,**
**dass** mittels der Schutzeinrichtung ein Überschlagen des Kraftfahrzeugs erfassbär ist und dass der Luftsack (24; 42; 52; 74; 84; 94), wenn ein Überschlagen des Fahrzeugs erfasst wird, so weit aufgeblasen wird und unter einem solchen, Winkel von dem Fahrzeugsitz (10) absteht, dass er den Kopf (30) des Insassen (12) aktiv in Richtung auf die Brust (32) des Insassen (12) beugt.

2. Schutzeinrichtung nach Anspruch 1,
**dadurch gekennzeichnet,**
**daß** sich der Luftsack (24; 42; 52; 74; 84; 96) in zumindest annähernd vollständig aufgeblasenem Zustand an der Kopfstütze (18) des Fahrzeugsitzes (10) und/oder am Fahrzeugdach (36) abstützt.

3. Schutzeinrichtung nach Anspruch 1 oder 2,
**dadurch gekennzeichnet,**
**daß** der zumindest annähernd vollständig aufgeblasene Luftsack (52) an seinen seitlichen Rändern (64) in Richtung der Sitzfläche (14) des Fahrzeugsitzes (10) erhaben ist.

4. Schutzeinrichtung nach Anspruch 1, 2 oder 3,
**dadurch gekennzeichnet,**
**daß** der Luftsack (52) in zumindest annähernd vollständig aufgeblasenem Zustand in einen Halteabschnitt (58) zum aktiven Beugen des Kopfes (30) des Insassen (12) und einen zwischen dem Fahrzeugsitz (10) und dem Halteabschnitt (58) angeordneten Stützabschnitt (56) zum Abstützen des Halteabschnitts (58) untergliedert ist.

5. Schutzeinrichtung nach Anspruch 4,
**dadurch gekennzeichnet,**
**daß** der Halteabschnitt (58) aus mehreren nebeneinander angeordneten, miteinander gegebenenfalls in Strömungsverbindung stehenden, Längskammern (62) gebildet ist, die sich in aufgeblasenem Zustand vorzugsweise mit ihren Längsrichtungen ausgehend vom Fahrzeugsitz (10) in Richtung des Fahrzeugdaches (36) erstrecken.

6. Schutzeinrichtung nach Anspruch 4 oder 5,
**dadurch gekennzeichnet,**
**daß** der Stützabschnitt (56) mindestens eine längliche Kammer (60) aufweist, die sich in aufgeblasenem Zustand quer oder parallel zur Längsrichtung der Rückenlehne (16) des Fahrzeugsitzes (10) erstreckt.

7. Schutzeinrichtung nach Anspruch 4,
**dadurch gekennzeichnet,**
**daß** der Luftsack (74) derart geformt ist, daß er in zumindest annähernd vollständig aufgeblasenem Zustand in den Halteabschnitt und den Stützabschnitt untergliedert ist, wobei der Halteabschnitt und der Stützabschnitt eine gemeinsame Kammer bilden.

8. Schutzeinrichtung nach Anspruch 1, 2 oder 3,
**dadurch gekennzeichnet,**
**daß** der Luftsack (84) aus mehreren nebeneinander angeordneten, länglichen Kammern (86) gebildet ist, die miteinander in Strömungsverbindung stehen und sich in aufgeblasenem Zustand quer zur Längsrichtung der Rückenlehne (16) des Fahrzeugsitzes (10) erstrecken, und daß die einzelnen Kammern (86) derart abschnittsweise miteinander verbunden sind, daß der Luftsack (10) in zumindest annähernd vollständig aufgeblasenem Zustand vom Fahrzeugsitz (10) ausgehend zum Beugen des Kopfes (30) des Insassen (12) einen gekrümmten Verlauf zeigt.

9. Schutzeinrichtung nach einem der vorhergehenden Ansprüche,
**dadurch gekennzeichnet,**
**daß** der aufgeblasene Luftsack (24) bzw. der Halteabschnitt zwischen dem Kopf (30) des Insassen (12) und dem Fahrzeugsitz (10) einen Keil (34) bildet, der den Kopf (30) des Insassen (12) in die gebeugte Haltung drückt.

10. Schutzeinrichtung nach einem der Ansprüche 1 bis 8,
**dadurch gekennzeichnet,**
**daß** der aufgeblasene Luftsack (42; 52; 74; 84; 94, 96) bzw. der Halteabschnitt (58) des Luftsacks (42; 52; 74; 84; 94, 96) derart gestaltet ist, daß er als Rutsche (44) wirkt, die den Kopf (30) des Insassen (12) in eine gebeugte Haltung drückt und entlang der der Insasse (12) während einer Bewegung in Richtung des Fahrzeugdaches (36) mit seinem aktiv gebeugten Kopf (30) gleichzeitig definiert geführt ist.

11. Schutzeinrichtung nach Anspruch 1, 2, 3, 9 oder 10,
**dadurch gekennzeichnet,**
**daß** die Luftsackanordnung (92) einen in zumindest annähernd vollständig aufgeblasenem Zustand zum Beugen des Kopfes (30) des Insassen (12) dienenden ersten Luftsack (94), der in die Rückenlehne (16) des Fahrzeugsitzes (10) integriert ist, und einen in die Kopfstütze (18) des Fahrzeugsitzes (10) integrierten zweiten Luftsack (96) aufweist, der in zumindest annähernd vollständig aufgeblasenem Zustand zwischen der Kopfstütze (18) und dem ersten Luftsack (84) angeordnet ist und diesen abstützt.

12. Schutzeinrichtung nach einem der vorhergehenden Ansprüche,
**dadurch gekennzeichnet,**
**daß** das Gewebe des Luftsacks (24; 42; 52; 74; 84; 94, 96) zumindest annähernd gasdicht ist, und daß der Innendruck im Luftsack (24; 42; 52; 74; 84; 94, 96) nach dem Aufblasen über einen vorgegebenen Zeitraum, vorzugsweise über einen Zeitraum von etwa 5 bis 7 Sekunden aufrechterhalten bleibt.

13. Schutzeinrichtung nach einem der vorhergehenden Ansprüche,
**dadurch gekennzeichnet,**
**daß** der Luftsack (24; 42; 52; 74; 84; 96) derart ausgeformt ist, daß er während des Entfaltens die am Fahrzeugsitz (10) verschieblich gehaltene Kopfstütze (18) in eine angehobene Stellung bewegt, in der der aufgeblasene Luftsack (24; 42; 52; 74; 84; 96) an der Kopfstütze (18) großflächig abstützbar ist.

14. Schutzeinrichtung nach einem der vorhergehenden Ansprüche,
**dadurch gekennzeichnet,**
**daß** der Luftsack (24; 42; 52; 84; 94) der Luftsackanordnung (22; 54; 82; 92) in die Rückenlehne (16) des Fahrzeugsitzes (10) integriert ist.

15. Schutzeinrichtung nach Anspruch 14,
**dadurch gekennzeichnet,**
**daß** der Sitzbezug (26) während des Entfaltens des in die Rückenlehne (16) integrierten Luftsacks (24; 42; 52; 84; 94) entlang einer vorgegebenen Linie definiert derart aufreißt, daß der Sitzbezug (26) und gegebenenfalls auch das Rückenpolster (28) der Rückenlehne (16) nach dem Aufblasen des Luftsacks (24; 42; 52; 84; 94) zumindest abschnittsweise zwischen dem Insassen (12) und dem Luftsack (24; 42; 52; 84; 94) angeordnet ist.

16. Schutzeinrichtung nach einem Ansprüche 1 bis 13,
**dadurch gekennzeichnet,**
**daß** der Luftsack (74; 96) der Luftsackanordnung (72; 92) in die Kopfstütze (16) des Fahrzeugsitzes (10) integriert ist.

17. Schutzeinrichtung nach einem der vorhergehenden Ansprüche,
**gekennzeichnet,**
**durch** eine mit dem Gasgenerator bzw. mit den Gasgeneratoren der Luftsackanordnung (22; 54; 72; 82; 92) in Verbindung stehende Steuereinheit, die bei einem Überschlagen des Fahrzeuges den Gasgenerator zum Aufblasen des Luftsacks (24; 42; 52; 74; 84; 94, 96) zündet.

18. Schutzeinrichtung nach Anspruch 17,
**dadurch gekennzeichnet,**
**daß** die Steuereinheit bei einem Frontal- oder Heckaufprall des Fahrzeuges den mehrstufigen Gasgenerator bzw. mindestens einen der Gasgeneratoren der Luftsackanordnung (22; 54; 72; 82; 92) derart betätigt, daß der Luftsack (24; 42; 52; 74; 84; 96) nur soweit mit Gas gefüllt wird, daß sich der Luftsack (24; 42; 52; 74; 84; 96) zwischen dem Kopf (30) des Insassen (12) und der Kopfstütze (18) des Fahrzeugsitzes (10) befindet, ohne daß dabei der Kopf (30) des Insassen (12) verlagert ist.

19. Schutzeinrichtung nach Anspruch 17 oder 18,
**dadurch gekennzeichnet,**
**daß** die Steuereinheit ein Auslösen des Luftsacks (24; 42; 52; 74; 84; 94, 96) verhindert, wenn sich der Fahrzeugsitz (10) in einer für das Entfalten des Luftsacks (24; 42; 52; 74; 84; 94, 96) ungeeigneten Stellung befindet.

20. Schutzeinrichtung nach Anspruch 17, 18 oder 19,
**dadurch gekennzeichnet,**
**daß** die Steuereinheit ein Auslösen des Luftsacks (24; 42; 52; 74; 84; 94, 96) verhindert, wenn der Insasse (12) nicht ordnungsgemäß am Fahrzeugsitz (10) angeschnallt ist, oder wenn der Fahrzeugsitz (10) unbesetzt ist.

21. Schutzeinrichtung nach einem der Ansprüche 17 bis 20,
**dadurch gekennzeichnet,**
**daß** die Steuereinheit ein Auslösen eines im Fahrzeug vor dem Fahrzeugsitz (10) angeordneten Frontluftsacks zumindest zeitweise verhindert, wenn der Luftsack (24; 42; 52; 74; 84; 94, 96) zum Schutz des Kopf-Nacken-Bereiches gezündet werden soll.

22. Verfahren zum Schutz eines Insassen eines Fahrzeuges, insbesondere eines Kraftfahrzeuges, bei dem erfasst wird, ob das Fahrzeug in einen Unfall verwickelt ist, und bei dem bei einem Erfassen eines Unfalls ein zum Schutz des Kopf-Näcken-Bereiches des Insassen (12) dienender Luftsack (24; 42; 52; 74; 84; 94, 96) einer in einen Fahrzeugsitz (10) des Fahrzeugs integrierten Luftsackanordnung (22; 54; 72; 82; 92) aufgeblasen wird,
**dadurch gekennzeichnet,**
**dass** der Luftsack (24; 42; 52; 74; 84; 94, 96), wenn ein Überschlagen des Fahrzeugs erfasst wird, so weit aufgeblasen wird, dass er den Kopf (30) des Insassen (12) aktiv in Richtung auf die Brust (32) des Insassen (12) beugt.

23. Verfahren nach Anspruch 22,
**dadurch gekennzeichnet,**
**daß** ein Aufblasen des Luftsacks (24; 42; 52; 74; 84; 94, 96) verhindert wird, wenn sich der Fahrzeugsitz (10) in einer für das Aufblasen ungeeigneten Stellung befindet, wenn der Insasse (12) nicht ordnungsgemäß am Fahrzeugsitz (10) angeschnallt ist, oder wenn der Fahrzeugsitz (10) unbesetzt ist.

24. Verfahren nach Anspruch 22 oder 23,
**dadurch gekennzeichnet,**
**daß** ein Auslösen eines im Fahrzeug vor dem Fahrzeugsitz (10) angeordneten Frontluftsacks zumindest zeitweise verhindert wird, wenn der Luftsack (24; 42; 52; 74; 84; 94, 96) zum Schutz des Kopf-Nacken-Bereiches gezündet werden soll.

25. Verfahren nach einem der Ansprüche 22 bis 24,
**dadurch gekennzeichnet,**
**dass** der Luftsack (24; 42; 52; 74; 84; 94, 96), wenn ein Frontal- oder Heckaufprall des Fahrzeugs erfasst wird, nur so weit mit Gas gefüllt wird, dass sich der Luftsack (24; 42; 52; 74; 84; 94, 96) zwischen dem Kopf (30) des Insassen (12) und der Kopfstütze (18) des Fahrzeugsitzes (10) befindet, ohne dass dabei der Kopf (30) des Insassen (12) verlagert wird.

## Claims

1. Protective device for the occupants of a vehicle, in particular of a motor vehicle, with an airbag arrangement (22; 54; 72; 82; 92) which is integrated in the vehicle seat (10) and which has at least one airbag (24; 42, 52, 74, 84, 94) serving for protecting the head/neck region of the occupant (12), the airbag (24; 42; 52; 74; 84; 94), in the at least approximately fully inflated state, projecting from the vehicle seat (10) in the direction of the seat surface (14) of the vehicle seat (10) inclined at an angle to the longitudinal direction of the backrest (16), **characterized in that** overturning of the vehicle is detected by means of the protective device and **in that** the airbag (24; 42; 52; 74; 84; 94) is inflated to such an extent and projects from the vehicle seat (10) at such an angle that it actively bends the head (30) of the occupant (12) in the direction of the chest (32) of the occupant (12).

2. Protective device according to Claim 1, **characterized in that** the airbag (24, 42, 52, 74, 84, 96), in the at least approximately fully inflated state, is supported on the head restraint (18) of the vehicle seat (10) and/or on the vehicle roof (36).

3. Protective device according to Claim 1 or 2, **characterized in that**
the at least approximately fully inflated airbag (52) is raised at its lateral margins (64) in the direction of the seat surface (14) of the vehicle seat (10).

4. Protective device according to Claim 1, 2 or 3, **characterized in that** the airbag (52), in the at least approximately fully inflated state, is subdivided into a holding portion (58) for actively bending the head (30) of the occupant (12) and a supporting portion (56) arranged between the vehicle seat (10) and the holding portion (58) and intended for supporting the holding portion (58).

5. Protective device according to Claim 4, **characterized in that** the holding portion (58) is formed from a plurality of longitudinal chambers (62) which are arranged next to one another and, if appropriate, are flow-connected to one another and which, in the inflated state, preferably extend with their longitudinal directions from the vehicle seat (10) in the direction of the vehicle roof (36).

6. Protective device according to Claim 4 or 5, **characterized in that** the supporting portion (56) has at least one elongate chamber (60) which, in the inflated state, extends transversely or parallel to the longitudinal direction of the backrest (16) of the vehicle seat (10).

7. Protective device according to Claim 4, **characterized in that** the airbag (74) is shaped in such a way that, in the at least approximately fully inflated state, it is subdivided into the holding portion and the supporting portion, the holding portion and the supporting portion forming a common chamber.

8. Protective device according to Claim 1, 2 or 3, **characterized in that** the airbag (84) is formed from a plurality of elongate chambers (86) which are arranged next to one another and are flow-connected to one another and which, in the inflated state, extend transversely to the longitudinal direction of the backrest (16) of the vehicle seat (10), and **in that** the individual chambers (86) are connected to one another, in portions, in such a way that the airbag (84), in the at least approximately fully inflated state, has, starting from the vehicle seat (10), a curved profile in order to bend the head (30) of the occupant (12).

9. Protective device according to one of the preceding claims, **characterized in that** the inflated airbag (24) or the holding portion forms, between the head (30) of the occupant (12) and the vehicle seat (10), a wedge (34) which presses the head (30) of the occupant (12) into the bent posture.

10. Protective device according to one of Claims 1 to 8, **characterized in that**
the inflated airbag (42; 52; 74; 84; 94, 96) or the holding portion (58) of the airbag (42; 52; 74; 84; 94, 96) is configured in such a way that it acts as a shoot (44) which presses the head (30) of the occupant (12) into a bent posture and along which the occupant (12) is simultaneously guided with his actively bent head (30) in a defined manner during movement in the direction of the vehicle roof (36).

11. Protective device according to Claim 1, 2, 3, 9 or 10, **characterized in that** the airbag arrangement (92) has a first airbag (94), which, in the at least approximately fully inflated state, serves for bending the head (30) of the occupant (12) and which is integrated into the backrest (16) of the vehicle seat (10), and a second airbag (96), which is integrated into the head restraint (18) of the vehicle seat (10) and which, in the at least approximately fully inflated state, is arranged between the head restraint (18) and the first airbag (84) and supports the latter.

12. Protective device according to one of the preceding claims, **characterized in that** the fabric of the airbag (24; 42; 52; 74; 84; 94, 96) is at least approximately gastight, and **in that** the internal pressure in the airbag (24; 42; 52; 74; 84; 94, 96) after inflation is maintained for a predetermined period of time, preferably for a period of time of about 5 to 7 seconds.

13. Protective device according to one of the preceding claims, **characterized in that** the airbag (24; 42; 52; 74; 84; 96) is shaped in such a way that, during deployment, it moves the head restraint (18), held displaceably on the vehicle seat (10), into a raised position in which the inflated airbag (24; 42; 52; 74; 84; 96) can be supported over a large area on the head restraint (18).

14. Protective device according to one of the preceding claims, **characterized in that** the airbag (24; 42; 52; 84; 94) of the airbag arrangement (22; 54; 82; 92) is integrated into the backrest (16) of the vehicle seat (10).

15. Protective device according to Claim 14, **characterized in that**, during the deployment of the airbag (24; 42; 52; 84; 94) integrated into the backrest (16), the seat covering (26) tears apart in a defined manner along a predetermined line, in such a way that, after the inflation of the airbag (24; 42; 52; 84; 94), the seat covering (26) and, if appropriate, also the back cushion (28) of the backrest (16) are arranged, at least in portions, between the occupant (12) and the airbag (24; 42; 52; 84; 94).

16. Protective device according to one of Claims 1 to 13, **characterized in that** the airbag (74; 96) of the airbag arrangement (72; 92) is integrated into the head restraint (18) of the vehicle seat (10).

17. Protective device according to one of the preceding claims, **characterized by** a control unit which is connected to the gas generator or to the gas generators of the airbag arrangement (22; 54; 72; 82; 92) and which, when the vehicle overturns, ignites the gas generator in order to inflate the airbag (24; 42; 52; 74; 84; 94, 96).

18. Protective device according to Claim 17, **characterized in that**, in the event of a front or rear collision of the vehicle, the control unit actuates the multistage gas generator or at least one of the gas generators of the airbag arrangement (22; 54; 72; 82; 92), in such a way that the airbag (24; 42; 52; 74; 84; 96) is filled with gas only to an extent such that the airbag (24; 42; 52; 74; 84; 96) is located between the head (30) of the occupant (12) and the head restraint (18) of the vehicle seat (10), without the head (30) of the occupant (12) being displaced at the same time.

19. Protective device according to Claim 17 or 18, **characterized in that** the control unit prevents the airbag (24; 42; 52; 74; 84; 94, 96) from being triggered when the vehicle seat (10) is in a position unsuitable for the deployment of the airbag (24; 42; 52; 74; 84; 94, 96).

20. Protective device according to Claim 17, 18 or 19, **characterized in that** the control unit prevents the airbag (24; 42; 52; 74; 84; 94, 96) from being triggered when the occupant (12) is not properly strapped to the vehicle seat (10) or when the vehicle seat (10) is unoccupied.

21. Protective device according to one of Claims 17 to 20, **characterized in that** the control unit at least temporarily prevents a triggering of a front airbag arranged in the vehicle in front of the vehicle seat (10), when the airbag (24; 42; 52; 74; 84; 94, 96) is to be ignited in order to protect the head/neck region.

22. Method for the protection of an occupant of a vehicle, in particular of a motor vehicle, in which it is detected whether the vehicle is involved in an accident and in which, when an accident is detected, an airbag (24; 42; 52; 74; 84; 94, 96) of an airbag arrangement (22; 54; 72; 82; 92) integrated in a vehicle seat (10) of the vehicle, said airbag serving for protecting the head/neck region of the occupant (12), is inflated, **characterized in that**, when overturning of the vehicle is detected, the airbag (24; 42; 52; 74; 84; 94, 96) is inflated to an extent such that it actively bends the head (30) of the occupant (12) in the direction of the chest (32) of the occupant (12).

23. Method according to Claim 22, **characterized in that** an inflation of the airbag (24; 42; 52; 74; 84; 94, 96) is prevented when the vehicle seat (10) is in a position unsuitable for inflation, when the occupant (12) is not fully strapped in the vehicle seat (10) or when the vehicle seat (10) is unoccupied.

24. Method according to Claim 22 or 23, **characterized in that** a triggering of a front airbag arranged in the vehicle in front of the vehicle seat (10) is at least temporarily prevented when the airbag (24; 42; 52; 74; 84; 94, 96) is to be ignited in order to protect the head/neck region.

25. Method according to one of Claims 22 to 24, **characterized in that**, when a front or rear collision of the vehicle is detected, the airbag (24; 42; 52; 74; 84; 94, 96) is filled with gas only to an extent such that the airbag (24; 42; 52; 74; 84; 94, 96) is located between the head (30) of the occupant (12) and the head restraint (18) of the vehicle seat (10), without the head (30) of the occupant (12) being displaced at the same time.

## Revendications

1. Dispositif de protection pour passagers d'un véhicule, en particulier d'un véhicule automobile, avec une disposition d'airbags (22 ; 54 ; 72 ; 82 ; 92) intégrée dans le siège du véhicule (10) comprenant au moins un airbag (24; 42; 52; 74 ; 84 ; 94) destiné à la protection de la zone tête/nuque du passager (12), moyennant quoi l'airbag (24 ; 42 ; 52 ; 74 ; 84 ; 94) est éloigné à l'état au moins pratiquement entièrement gonflé du siège du véhicule (10) selon un angle relatif au sens longitudinal du dossier (16) incliné dans le sens de la surface d'assise (14) du siège du véhicule (10),
**caractérisé en ce que**,
un tonneau du véhicule automobile peut être détecté au moyen du dispositif de protection, et **en ce que** l'airbag (24 ; 42 ; 52; 74 ; 84 ; 94), en cas de détection d'un tonneau du véhicule, est gonflé dans une telle mesure, et s'éloigne du siège du véhicule (10) selon un angle tel, qu'il incline activement la tête (30) du passager (12) vers la poitrine (32) du passager (12).

2. Dispositif de protection selon la revendication 1,
**caractérisé en ce que**,
l'airbag (24 ; 42 ; 52 ; 74 ; 84 ; 96) s'appuie à l'état au moins pratiquement entièrement gonflé contre l'appui-tête (18) du siège du véhicule (10) et/ou contre le plafond du véhicule (36).

3. Dispositif de protection selon la revendication 1 ou 2,
**caractérisé en ce que**,
l'airbag (52) à l'état au moins pratiquement entièrement gonflé est convexe sur ses bords (64) latéraux en direction de la surface d'assise (14) du siège du véhicule (10).

4. Dispositif de protection selon la revendication 1, 2 ou 3,
**caractérisé en ce que**,
l'airbag (52) à l'état au moins pratiquement entièrement gonflé est divisé en une section de retenue (58) destinée à la flexion active de la tête (30) du passager (12) et une section d'appui (56) disposée entre le siège du véhicule (10) et la section de retenue (58), et destinée à l'appui de la section de retenue (58).

5. Dispositif de protection selon la revendication 4,
**caractérisé en ce que**
la section de retenue (58) est composée de plusieurs chambres longitudinales (62) disposées les unes à côté des autres situées éventuellement en communication fluidique les unes avec les autres qui s'étendent à l'état gonflé de préférence avec leurs directions longitudinales à partir du siège du véhicule (10) vers le plafond du véhicule (36).

6. Dispositif de protection selon la revendication 4 ou 5,
**caractérisé en ce que**,
la section d'appui (56) comprend au moins une chambre longitudinale (60) qui s'étend à l'état gonflé transversalement ou parallèlement au sens longitudinal du dossier (16) du siège du véhicule (10).

7. Dispositif de protection selon la revendication 4,
**caractérisé en ce que**,
l'airbag (74) est formé de telle sorte qu'il est divise à l'état au moins pratiquement entièrement gonflé en section de retenue et en section d'appui, moyennant quoi la section de retenue et la section d'appui forment une chambre commune.

8. Dispositif de protection selon la revendication 1, 2 ou 3,
**caractérisé en ce que**,
l'airbag (84) est composé de plusieurs chambres (86) longitudinales disposées les unes à côté des autres qui sont en communication fluidique les unes avec les autres et s'étendent à l'état gonflé transversalement au sens longitudinal du dossier (16) du siège du véhicule (10), et **en ce que** les différentes chambres (86) sont reliées les unes aux autres par section, de sorte que l'airbag (10) présente une courbure à l'état au moins pratiquement entièrement gonflé depuis le siège du véhicule (10) pour la flexion de la tête (30) du passager (12).

9. Dispositif de protection selon l'une des revendications précédentes,
**caractérisé en ce que**,
l'airbag gonflé (24) ou la section de retenue entre la tête (30) du passager (12) et le siège du véhicule (10) forme une cale (34) qui maintient par pression la tête (30) du passager (12) dans la position pliée.

10. Dispositif de protection selon l'une des revendications 1 à 8,
**caractérisé en ce que**,
l'airbag gonflé (42 ; 52 ; 74 ; 84 ; 94 ; 96), ou la section de retenue (58) de l'airbag (42 ; 52 ; 74 ; 84; 94 ; 96), est configuré de telle sorte qu'il exerce une action de glissière (44) qui maintient par pression la tête (30) du passager (12) dans une position pliée, et le long de laquelle le passager (12) est dirigé de manière simultanément définie pendant un mouvement vers le plafond du véhicule (36) avec sa tête (30) inclinée activement.

11. Dispositif de protection selon la revendication 1, 2, 3, 9 ou 10,
**caractérisé en ce que**,
la disposition d'airbags (92) comprend un premier airbag (94) à l'état au moins pratiquement entièrement gonflé destiné à la flexion de la tête (30) du passager (12) qui est intégré dans le dossier (16) du siège du véhicule (10), et un second airbag (96) intégré dans l'appui-tête (18) du siège du véhicule (10) qui est disposé à l'état au moins pratiquement entièrement gonflé entre l'appui-tête (18) et le premier airbag (84) et soutient celui-ci.

12. Dispositif de protection selon l'une dés revendications précédentes,
**caractérisé en ce que**,
le tissu de l'airbag (24 ; 42 ; 52 ; 74 ; 84 ; 94; 96) est au moins approximativement étanche aux gaz, et **en ce que** la pression interne dans l'airbag (24; 42; 52; 74 ; 84 ; 94 ; 96) reste maintenue après le gonflement pendant une période prédéterminée, de préférence pendant une période de 5 à 7 secondes.

13. Dispositif de protection selon l'une des revendications précédentes,
**caractérisé en ce que**,
l'airbag (24 ; 42 ; 52 ; 74 ; 84 ; 96) est configuré de telle sorte qu'il déplace pendant le déploiement l'appui-tête (18) fixé dé manière coulissante sur le siège du véhicule (10) dans une position relevée dans laquelle l'airbag gonflé (24 ; 42 ; 52 ; 74 ; 84 ; 96) peut être appuyé à grande surface contre l'appui-tête (18).

14. Dispositif de protection selon l'une des revendications précédentes,
**caractérisé en ce que**,
l'airbag (24 ; 42 ; 52 ; 84 ; 94) de la disposition d'airbags (22 ; 54 ; 82 ; 92) est intégré dans le dossier (16) du siège du véhicule (10).

15. Dispositif de protection selon la revendication 14,
**caractérisé en ce que**,
le revêtement de siège (26) pendant le déploiement de l'airbag (24; 42; 52 ; 84 ; 94) intégré dans le dossier (16) se déchire le long d'une ligne prédéfinie de telle sorte que le revêtement de siège (26), et éventuellement également le rembourrage (28) du dossier (16), est disposé après le gonflement de l'airbag (24; 42 ; 52 ; 84 ; 94) au moins par section entre le passager (12) et l'airbag (24 ; 42 ; 52 ; 84 ; 94).

16. Dispositif de protection selon l'une des revendications 1 à 13,
**caractérisé en ce que**,
l'airbag (74; 96) de la disposition d'airbags (72 ;92) est intégré dans l'appui-tête (16) du siège du véhicule (10).

17. Dispositif de protection selon l'une des revendications précédentes,
**caractérisé,**
**par** une unité de commande reliée au générateur de gaz ou aux générateurs de gaz de la disposition d'airbags (22 ; 54 ; 72 ; 82; 92), cette unité de commande activant lors d'un tonneau du véhicule le générateur de gaz pour le gonflement de l'airbag (24 ; 42 ; 52 ; 74; 84 ; 94 ; 96).

18. Dispositif de protection selon la revendication 17,
**caractérisé en ce que**,
l'unité de commande en cas de collision frontale ou arrière du véhicule actionne le générateur de gaz à plusieurs étages ou au moins un des générateurs de gaz de la disposition d'airbags (22 ; 54 ; 72 ; 82 ; 92), de telle sorte que l'airbag (24 ; 42 ; 52 ; 74 ; 84 ; 96) est rempli de gaz uniquement de façon telle que l'airbag (24 ; 42 ; 52 ; 74 ; 84 ; 96) se trouve entre la tête (30) du passager (12) et l'appui-tête (18) du siège du véhicule (10) sans déplacement de la tête (30) du passager (12).

19. Dispositif de protection selon la revendication 17 ou 18,
**caractérisé en ce que**,
l'unité de commande empêche un déclenchement de l'airbag (24 ; 42 ; 52 ; 74 ; 84 ; 94 ; 96) lorsque le siège du véhicule (10) se trouve dans une position inappropriée pour le déploiement de l'airbag (24 ; 42; 52 ; 74 ; 84 ; 94 ; 96).

20. Dispositif de protection selon la revendication 17, 18 ou 19,
**caractérisé en ce que**,
l'unité de commande empêche un déclenchement de l'airbag (24 ; 42 ; 52 ; 74 ; 84 ; 94 ; 96) lorsque le passager (12) n'est pas attaché correctement sur le siège du véhicule (10), ou lorsque le siège du véhicule (10) est inoccupé.

21. Dispositif de protection selon l'une des revendications 17 à 20,
**caractérisé en ce que**,
l'unité de commande empêche au moins temporairement un déclenchement d'un airbag frontal disposé dans le véhicule devant le siège du véhicule (10), lorsque l'airbag (24 ; 42 ; 52 ; 74 ; 84 ; 94 ; 96) doit être activé pour la protection de la zone tête/nuque.

22. Procédé de protection d'un passager d'un véhicule, en particulier d'un véhicule automobile, dans lequel il est détecté si le véhicule est impliqué dans un accident, et dans lequel, en cas de détection d'un accident, un airbag (24 ; 42 ; 52 ; 74 ; 84 ; 94 ; 96) destiné à la protection de la zone tête/nuque du passager (12) d'une disposition d'airbags (22 ; 54 ; 72 ; 82 ; 92) intégrée dans un siège du véhicule (10) est gonflé,
**caractérisé en ce que**,
l'airbag (24 ; 42 ; 52 ; 74 ; 84 ; 94 ; 96), en cas de détection d'un tonneau du véhicule, est gonflé de façon telle qu'il incline activement la tête (30) du passager (12) vers la poitrine (32) du passager (12).

23. Procédé selon la revendication 22,
**caractérisé en ce que**,
un gonflement de l'airbag (24 ; 42 ; 52 ; 74 ; 84; 94 ; 96) est empêché, lorsque le siège du véhicule (10) se trouve dans une position inappropriée pour le gonflement, lorsque le passager (12) n'est pas attaché correctement au siège du véhicule (10), ou lorsque le siège du véhicule (10) est inoccupé.

24. Procédé selon la revendication 22 ou 23,
**caractérisé en ce que**,
un déclenchement d'un airbag frontal disposé dans le véhicule devant le siège du véhicule (10) est évité au moins temporairement, lorsque l'airbag (24 ; 42 ; 52 ; 74 ; 84 ; 94 ; 96) doit être activé pour la protection de la zone tête/nuque.

25. Procédé selon l'une des revendications 22 à 24,
**caractérisé en ce que**,
l'airbag (24 ; 42 ; 52 ; 74 ; 84 ; 94 ; 96), en cas de détection d'une collision frontale ou arrière du véhicule, est rempli de gaz uniquement de façon telle que l'airbag (24 ; 42 ; 52 ; 74 ; 84 ; 94 ; 96) se trouve entre la tête (30) du passager (12) et l'appui-tête (18) du siège du véhicule (10) sans déplacement de la tête (30) du passager (12).
